# EUROPEAN PATENT SPECIFICATION

(11) **EP 1 898 588 B1**
(45) Date of publication and mention of the grant of the patent: **13.01.2010**
(21) Application number: 06291437.9
(22) Date of filing: 08.09.2006
(51) Int. Cl.: H04L 29/06

(54) **A method of requesting the use of a desired tunnel type**
Verfahren zur Anforderung der Verwendung von erwünschten Datentunneltyp
Procédé pour demander l'utilisation d'un type de tunnel désiré

(43) Date of publication of application: 12.03.2008
(73) Proprietor: Alcatel Lucent, 75008 Paris (FR)
(72) Inventor: De Juan Huarte, Federico, 75014 Paris (FR); Conte, Alberto, 75014 Paris (FR)
(74) Representative: Schmidt, Werner Karl

(56) References cited:
- EP-A2- 1 434 406
- US-A1- 2003 224 758
- US-A1- 2003 224 788

## Description

### Field of the invention

The invention relates to a method of specifying a desired tunnel type, to a communications network, to a foreign agent, to a home agent, and to a computer program product for performing the method in accordance with the invention.

### Background and related art

The mobile internet protocol standard, also referred to as Mobile-IP or as MIP, is an internet engineering task force (IETF) standard communications protocol that is designed to allow mobile device users to move from one network to another network while maintaining their permanent IP-address. Mobile-IP is described in IETF RFC 3344 and RFC 2002.

In the mobile internet protocol standard, a mobile device is referred to as mobile node (MN). A mobile node is a node in an IP-network that is able to change its access point to the internet by use of Mobile-IP. A mobile node keeps always his IP-address (also referred to as primary IP-address) and is able to communicate uninterruptedly to the internet as long as a connection is established on layer 2. A mobile node must not necessarily be a laptop or a mobile station; a mobile node can for example also be an IP-router onboard of an airplane.

The home network of a mobile node is the sub-network to which the mobile node is associated with according to his IP-address. When the mobile node is located in the home network then support via Mobile-IP is not necessary.

A foreign network (also called visited network) is the actual sub-network in which the mobile node resides when the mobile node is not in the home network. In the foreign network, Mobile-IP support of the mobile node is required. A foreign agent of a foreign network provides services to a mobile node when the mobile node is located in the corresponding foreign network. In view of the internet protocol, the so-called care of address (COA) specifies the actual location of the mobile node. Thus, the mobile node is addressable in the foreign network by its care of address which is given by the foreign network to the mobile node. The care of address is therefore also sometimes referred to as secondary IP-address. The above mentioned care of address can be hosted by the foreign agent. The care of address is then an IP-address of the foreign agent.

A home agent (HA) of the home network also provides services to a mobile node. The home agent maintains a database, in which the home agent keeps track of the care of addresses of the mobile nodes associated with the home agent (mobility binding). Thus, the database provides mappings of actual care of addresses to the primary IP-addresses of mobile nodes associated with a home agent.

A correspondent node (CN) sends data packets (also referred to as IP-datagrams) to the primary IP address of the mobile node. The data packets are received by the home agent of the mobile node. The home agent is able to identify by use of the above mentioned database the care of address of the mobile node. The data packets are tunneled from the home agent to the foreign agent for the case when the care of address of the mobile node is hosted by the foreign agent. The above mentioned foreign agent is thus the end point and the home agent is the starting point of the tunnel. From a logical point of view, a tunnel is a (secured) channel for the transmission of data packets between the starting and the end point of the tunnel. The tunneling of the IP-datagrams through the tunnel is carried out by encapsulation of the data and then by sending the encapsulated data over the tunnel. The IP-datagrams are de-capsulated at the end point of the tunnel and then further processed to the mobile node. According to the actual standard, several tunnel types that refer to different ways of encapsulating data are available.

When the mobile node has received a care of address it has to register its care of address at its home agent so that the home agent is able to update the above mentioned database. In order to register its care of address, the mobile node sends a registration request message to the home agent by which the mobile node provides its care of address to the home agent. The care of address of the mobile node remains in the database only for a certain amount of time. Thus, the registration request message is not only sent after reception of the care of address but regularly in order to keep the database updated. The mobile node specifies also in the registration request message which of the tunnel types provided by the Mobile-IP standard should be used for tunneling data packets destined for the mobile node from the tunnel starting point to the end point. The reason why the mobile node is according to prior art responsible for the selection of the tunnel type is that the actual IP-standard has been designed according to the principles of the internet: that is the intelligence is distributed to the end nodes. However, from a public network operator point of view, it is not desirable to allow the mobile node to select the tunnel type for a tunnel which is to be established between the foreign agent and the home agent which are both located on the network side.

EP-A2-1 434 406 describes establishing a bi-directional IP-tunnel in a mobile IP communication system in case of private address conflicts. A mobile node sends a registration request to a foreign agent. In case that the mobile node does not have a UPA, the foreign agent may reject the registration request by sending a response to the mobile node with a denial code that indicates an occurrence of address conflicts. The response message includes a UPA extension, which contains a UPA assigned to the mobile node and to be used by the mobile node. The UPA extension also informs the mobile node as to what encapsulation methods the foreign agent supports for the UPA tunneling.

There is therefore a need for an improved method of specifying a desired tunnel type, for an improved home agent, for an improved foreign agent and for an improved communications network comprising the home agent and the foreign agent.

### Summary of the invention

In a first aspect of the invention, there is provided a method of requesting the use of a desired tunnel type for tunneling internet protocol (IP) datagrams from a home agent to a foreign agent, wherein the IP-datagrams are destined for a mobile node, wherein the mobile node is associated with the home agent, and wherein the mobile node is linked to the home agent via the foreign agent. The method in accordance with the invention comprises the step of receiving a registration request message from the mobile node by the foreign agent and the step of adding an extension to the registration request message, wherein the extension specifies the desired tunnel type. The method further comprises the step of sending the registration request message with the extension to the home agent.

The foreign agent therefore receives the registration request message from the mobile node and adds an extension to the registration request message. The extension specifies the desired tunnel type which shall be used for establishing the tunnel for sending IP-datagrams directed towards the mobile node from the home agent to the foreign agent. The extended registration request message is then sent to the home agent. The method in accordance with the invention is particularly advantageous as the foreign agent is able to request the usage of the desired tunnel type. Thus, the component which represents the end point of the tunnel to be established is now able to request the desired tunnel type and the "intelligence" has been moved from the mobile node to the foreign agent.

In accordance with an embodiment of the invention, the method further comprises the step of receiving a registration reply message, wherein in the registration reply message the usage of the desired tunnel type for the tunnel is denied or granted by the home agent.

In case the home agent cannot grant the requested tunnel type it will return the corresponding error code and both, the home and the foreign agent, will have to fallback to the default option as specified by the corresponding network architecture or in the worst case deny service to the mobile station.

The mobile IP-standard requires mandatory for a mobile node, a foreign agent, and the home agent to support some standards, among which the IP-encapsulation within IP-standard (RFC2003) is defined as default method that all implementations must support. Therefore, if the home agent cannot support the tunnel technology requested by the foreign agent it shall then fall back to this default as indicated by MIP.

In accordance with an embodiment of the invention, the foreign agent is the end point of a tunnel established between the home agent and the foreign agent for tunneling the IP-datagrams. As already mentioned above, the method in accordance with the invention is particularly advantageously employed when the foreign agent represents the tunnel end point and holds the care of address of the mobile node.

In accordance with an embodiment of the invention, the IP-tunnel relates either to the ones already contemplated by MIP which are the IP-encapsulation within IP, minimal encapsulation within IP, and generic routing encapsulation (GRE), or to new types that may be added in the future such as multiple protocol label switching (MPLS), or to IP-security (IPSEC). The tunnel type can therefore relate to all encapsulation methods that are used for encapsulating IP-datagrams that are to be tunneled from the home agent to the foreign agent.

In accordance with an embodiment of the invention, the home agent and the foreign agent are comprised in a communications network employing the mobile internet protocol (MIP), wherein the registration request message is received by the foreign agent when the mobile node joins the communication network, when the mobile node sends a registration request method in order to keep the care of address updated at its home agent, or when the mobile node relocates within the communications network.

In another aspect the invention relates to a method of requesting the use of a desired tunnel type for tunneling internet protocol (IP) datagrams distinct for a mobile node from a home agent to a foreign agent, wherein the mobile node is associated with the home agent, wherein the mobile node is linked to the home agent via the foreign agent, and wherein the method comprises the step of receiving a registration request message of the mobile node from the foreign agent, wherein the registration request message comprises an extension, wherein the extension specifies the desired tunnel type. The method further comprises the step of determining if the desired tunnel type is supported by the home agent and the step of using the tunnel type for tunneling the IP-datagrams distinct for the mobile node from the home agent to the foreign agent if the foreign agent supports the specified tunnel type.

In accordance with an embodiment of the invention, the method further comprises sending a registration reply message to the foreign agent, wherein the usage of the desired tunnel type is granted if the foreign agent supports the specified tunnel type or wherein the usage of the desired tunnel type is denied otherwise.

In accordance with an embodiment of the invention, the method further comprises the step of ignoring another tunnel type specified by the mobile node in the registration request message.

In a third aspect the invention relates to a communications network comprising means for receiving a registration request message from a mobile node, wherein the mobile node is associated to a home agent of the communications network. The communications network further comprises means for adding an extension to the registration request message, wherein the extension specifies a desired tunnel type for tunneling internet protocol datagrams distinct for the mobile node from the home agent to a foreign agent of the communication network, said foreign agent providing a link between the home agent and the mobile node. The network further comprises means for sending the registration request message with the extension. The communications network further comprises means for receiving the registration request message with the extension and means for using the tunnel type specified in the extension of the registration request message for tunneling the IP-datagrams distinct for the mobile node from the home agent to the foreign agent.

In a fourth aspect the invention relates to a foreign agent that comprises means for receiving a registration request message from a mobile node, wherein the mobile node is associated with a home agent. The foreign agent has further means for adding an extension to the registration request message, wherein the extension specifies a desired tunnel type for tunneling internet protocol datagrams distinct for the mobile node from the home agent to the foreign agent. Moreover, the foreign agent comprises means for sending the registration request message with the extension to the home agent.

In a fifth aspect the invention relates to a home agent that comprises means for receiving a registration request message from a foreign agent, wherein the registration request has been previously received by the foreign agent from a mobile node, wherein the mobile node is associated with the home agent and wherein the registration request message comprises an extension, wherein the extension specifies a desired tunnel type tor tunneling internet protocol datagrams distinct tor the mobile node from the home agent to the foreign agent. The home agent further comprises means for using the desired tunnel type for tunneling the IP-datagrams distinct for the mobile node from the home agent to the foreign agent.

In a sixth aspect the invention relates to computer program products for specifying a desired tunnel type for tunneling internet protocol datagrams.

The aspects of the invention described above will become even more apparent from and elucidated with reference to the embodiments described hereinafter.

### Brief description of the drawings

In the following preferred embodiments of the invention will be described in greater detail by way of example only making reference to the drawings in which:
- Figure 1: shows a communications network serving a mobile node,
- Figure 2: shows a flow diagram illustrating basic steps performed by a method in accordance with the invention, and
- Figure 3: shows another flow diagram illustrating basic steps performed by a method in accordance with the invention.

### Detailed description

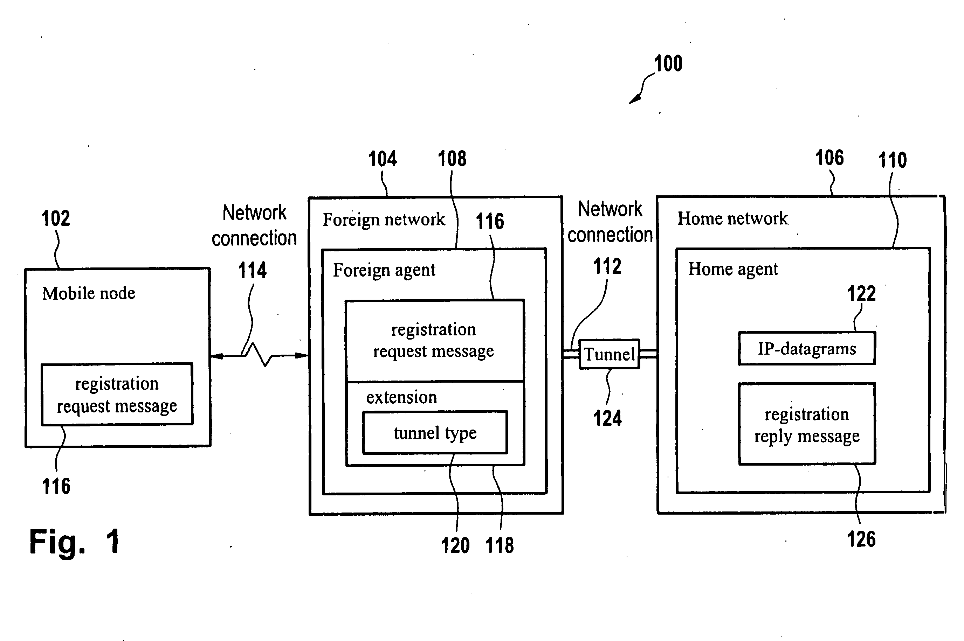

Fig. 1 shows a block diagram of a communications network 100 serving a mobile node 102. The communications network 100 is an IP-network that provides support via mobile-IP to the mobile node 102. The network 100 comprises a foreign network 104 and a home network 106. The home network 106 and the foreign network 104 are connected via the network connection 112 which is a connection over the internet. The foreign network 104 comprises a foreign agent 108 and the home network 106 has a home agent 112. The foreign agent 108 and the home agent 112 are typically hosted by routers that link the foreign network 104, or the home network 106, respectively, to other networks. For example the foreign agent 108 could be located on a router (not shown) that links the foreign network 104 to the home network 106, and the home agent 112 could be located on a router that links the home network 106, e.g., via the network connection 112, to the foreign network 104.

The foreign agent 108 and the home agent 112 can for example be computer program products that are stored permanently on a storage device of the corresponding routers and that are loaded into microprocessors, e.g., during the start-up of the routers.

The mobile node 102 is connected via a network connection 114 to the foreign network 104. The network connection 114 can be a wireless connection or can also be a line-based connection. The mobile node 102 is associated with the home network 106 as its primary IP-address (not shown in fig. 1) relates to the home network 106. When the mobile node 102 is connected to the foreign network 104 it sends a registration request message 116 to the home agent 110 in order to inform the home agent about the care of address that has been assigned according to Mobile-IP by the foreign network 104 to the mobile node 102.

For the case when the foreign agent 108 is the host of the care of address, the registration request message 116 is processed via the foreign agent 108. The foreign agent receives the registration request message 116 and adds an extension 118 to the registration request message 116. The extension 118 specifies a desired tunnel type 120 that is requested to be used when a tunnel 124 for sending IP-datagrams 122 destined for the mobile node 102 is established. The foreign agent 108 is then the end point of the tunnel 124, whereas the home agent 112 is the starting point of the tunnel 124. The registration request message 116 is then sent along with the extension 118 from the foreign agent 108 over the network connection 112 to the home agent 110.

The home agent 110 receives the registration request message 116 and extracts the extension 118 which specifies the desired tunnel type 120. The home agent 110 determines if it is able to use the desired tunnel type 120. If this is the case, then the tunnel type 120 will be used for tunneling the IP-datagrams 122 via tunnel 124 from the home agent 110 to the foreign agent 108. If this is not the case, the home agent 106 will use the default tunnel type established by the corresponding network architecture, which typically is the same as the one specified by MIP.

The home agent 106 further sends a registration reply message 126 in which the usage of the desired tunnel type 120 for the tunnel 124 is granted or wherein the usage of the desired tunnel type 120 is denied depending on the ability of the home agent 106 to employ the desired tunnel type.

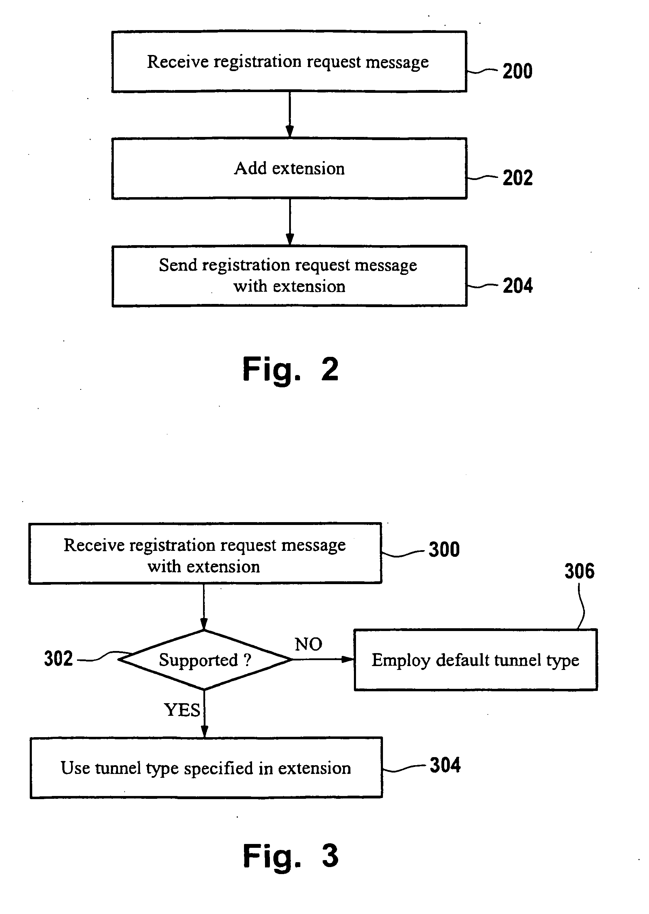

Fig. 2 shows a block diagram of a method for requesting the usage of a desired tunnel type for tunneling internet protocol datagrams destined for a mobile node from a home agent to a foreign agent, wherein the mobile node is associated with the home agent, and wherein the mobile node is linked to the home agent via the foreign agent. In step 200 a registration request message is received from the mobile node by the foreign agent. In step 202 an extension is added to the registration request message, wherein the extension specifies the desired tunnel type. In step 204 the registration request message is sent with the extension to the home agent.

Fig. 3 shows a flow diagram illustrating the basic steps that are performed by a method of requesting the usage of a desired tunnel type for tunneling internet protocol datagrams distinct for a mobile node from a home agent to a foreign agent, wherein the mobile node is associated with the home agent, wherein the mobile node is linked to the home agent via the foreign agent. In step 300 a registration request message sent from the mobile node via the foreign agent to the home agent is received by the home agent. The registration request message comprises an extension which is added by the foreign agent. The extension specifies the desired tunnel type. In step 302 it is determined if the desired tunnel type is supported by the home agent. If this is the case, then as outlined in step 304, the desired tunnel type is used for tunneling the IP-datagrams distinct for the mobile node from the home agent to the foreign agent. If this is not the case, then in step 306, the default tunnel type as defined in the corresponding network architecture shall be used. This default is typically the same as the one mandated in MIP.

**List of Reference Numerals**

| | |
|---|---|
| 100 | Communications network |
| 102 | Mobile node |
| 104 | Foreign network |
| 106 | Home network |
| 108 | Foreign agent |
| 110 | Home agent |
| 112 | Network connection |
| 114 | Network connection |
| 116 | Registration request message |
| 118 | Extension |
| 120 | Tunnel type |
| 122 | IP-datagram |
| 124 | Tunnel |
| 126 | Registration reply message |

## Claims

1. A method of requesting the usage of a desired tunnel type (120) for tunnelling Internet Protocol (IP) - datagrams (122) destined for a mobile node (102) from a home agent (110) to a foreign agent (108), said mobile node (102) being associated with said home agent (110), said mobile node (102) being linked to said home agent (110) via said foreign agent (108), said method being carried out at the foreign agent (108) and comprising:
- receiving a registration request message (116) by said foreign agent (108) from said mobile node (102);
**characterized by**
- adding an extension (118) to said registration request message (116), said extension (118) specifying said desired tunnel type (120); and
- sending said registration request message (116) with said extension (118) to said home agent (110).

2. The method of claim 1, further comprising:
- receiving a registration reply message (126) from the home agent (110), wherein in said registration reply message said home agent (110) grants or denies the usage of the desired tunnel type (120),
- using a default tunnel type as defined by the corresponding network architecture if the usage of said desired tunnel type (120) is denied by the home agent (110).

3. The method of claim 1, wherein said foreign agent (108) is the endpoint of a tunnel (124) established between said home agent (110) and said foreign agent (108) for tunnelling said IP-datagrams (122).

4. The method of claim 1, wherein the tunnel type (120) relates to any of the tunnel types already included in Mobile-IP such as IP encapsulation within IP, minimal encapsulation within IP, and Generic Routing Encapsulation, or to any candidate for future inclusion such as Multiple Protocol Label Switching, or IP Security.

5. A method of requesting the usage of a desired tunnel type (120) for tunnelling Internet Protocol (IP) - datagrams (122) destined for a mobile node (102) from a home agent (110) to a foreign agent (108), said mobile node (102) being associated with said home agent (110), said mobile node (102) being linked to said home agent (110) via said foreign agent (108), said method being carried out at the home agent (110) and **characterized by**:
- receiving a registration request message (116) of said mobile node (102) from said foreign agent (108), said registration request message (116) comprising an extension (118), said extension (118) specifying said desired tunnel type (120);
- determining whether said desired tunnel type (120) is supported by said home agent (110); and
- using said tunnel type (120) for tunnelling said IP-datagrams (122) destined for said mobile node (102) from said home agent (110) to said foreign agent (108) if said tunnel type (120) is supported by said home agent (110).

6. A communications network (100), said communications network comprising:
- means for receiving a registration request message (116) from a mobile node (102), said mobile node (102) being associated to a home agent (110) of said communications network (100);
- means for adding an extension (118) to said registration request message (116);
- means for sending said registration request message (116) with said extension (118); and
- means for receiving said registration request message (116) with said extension (118);
**characterized in that** said extension specifies a desired tunnel type (120) for tunnelling Internet Protocol (IP) - datagrams (122) destined for said mobile node from the home agent to a foreign agent of said communications network, said foreign agent interconnecting said mobile node and said home agent, and by
- means for using said tunnel type (120) for tunnelling said IP-datagrams (122) destined for said mobile node (102) from said home agent (110) to said foreign agent (108).

7. A foreign agent (108) comprising:
- means for receiving a registration request message (116) from a mobile node (102), said mobile node (102) being associated with a home agent (110);
**characterized by**
- means for adding an extension (118) to said registration request message (116), said extension (118) specifying a desired tunnel type (120) for tunnelling Internet Protocol (IP) - datagrams (122) destined for said mobile node (102) from the home agent (110) to said foreign agent (108); and
- means for sending said registration request message (116) with said extension (118) to said home agent (110).

8. A home agent (110) **characterized by**:
- means for receiving a registration request message (116) of a mobile node (102) from a foreign agent (108), said mobile node (102) being associated to said home agent (110), said registration request message (116) comprising an extension (118), said extension (118) specifying a desired tunnel type (120) for tunnelling Internet Protocol (IP) - datagrams (122) destined for said mobile node (102) from the home agent (110) to said foreign agent (108);
- means for using said desired tunnel type (120) for tunnelling said IP-datagrams (122) destined for said mobile node (102) from said home agent (110) to said foreign agent (108).

9. A computer program product for requesting the usage of a desired tunnel type (120) for tunnelling Internet Protocol (IP) - datagrams (122) destined for a mobile node (102) from a home agent (110) to a foreign agent (108), said mobile node (102) being associated with said home agent (110), said mobile node (102) being linked to said home agent (110) via said foreign agent (108), said computer program product comprising computer executable instructions, said instructions being adapted to performing at the foreign agent (108) the steps:
- receiving a registration request message (116) by said foreign agent (108) from a mobile node (102);
**characterized by**
- adding an extension (118) to said registration request message (116), said extension (118) specifying said desired tunnel type (120); and
- sending said registration request message (116) with said extension (118) to said home agent (110).

10. A computer program product for requesting the usage of a desired tunnel type (120) for tunnelling Internet Protocol (IP) - datagrams (122) destined for a mobile node (102) from a home agent (110) to a foreign agent (108), said mobile node (102) being associated with said home agent (110), said mobile node (102) being linked to said home agent (110) via said foreign agent (108), said computer program product comprising computer executable instructions, **characterized in that** said instructions being adapted to performing at the home agent (110) the steps:
- receiving a registration request message (116) of said mobile node (102) from said foreign agent (108), said registration request message (116) comprising an extension (118), said extension (118) specifying said desired tunnel type (120);
- determining whether said desired tunnel type (120) is supported by said home agent (110);
- using said tunnel type (120) for tunnelling said IP-datagrams (122) destined for said mobile node (102) from said home agent (110) to said foreign agent (108) if said tunnel type (120) is supported by said home agent (110).

## Patentansprüche

1. Ein Verfahren zur Anforderung der Verwendung eines erwünschten Datentunneltyps (120) zum Tunneln von für einen mobilen Knoten (102) bestimmten Internet-Protokoll (IP)-Datagrammen (122) von einem Heim-Agenten (110) an einen Fremd-Agenten (108), wobei der besagte mobile Knoten (102) dem besagten Heim-Agenten (110) zugeordnet ist, wobei der besagte mobile Knoten (102) über den besagten Fremd-Agenten (108) mit dem besagten Helm-Agenten (110) verknüpft ist, wobei das Verfahren am Fremd-Agenten (108) ausgeführt wird und umfasst:
- Empfangen einer Registrierungsanforderungsnachricht (116) von dem besagten mobilen Knoten (102) am besagten Fremd-Agenten (108);
**gekennzeichnet durch**
- Hinzufügen einer Erweiterung (118) zu der besagten Registrierungsanforderungsnachricht (116), wobei die besagte Erweiterung (118) den erwünschten Tunneltyp (120) spezifiziert; und
- Senden der besagten Registrierungsanforderungsnachricht (116) mit der besagten Erweiterung (118) an den besagten Heim-Agenten (110).

2. Das Verfahren nach Anspruch 1, weiterhin umfassend:
- Empfangen einer Registrierungsantwortnachricht (126) von dem Heim-Agenten (110), wobei der besagte Heim-Agent (110) die Verwendung des erwünschten Tunneltyps (120) in der besagten Reglstrierungsantwortnachricht bewilligt oder verweigert,
- Verwenden eines gemäß der entsprechenden Netzwerkarchitektur definierten voreingestellten Tunneltyps, wenn die Verwendung des erwünschten Tunneltyps (120) von dem Heim-Agenten (110) verweigert wird.

3. Das Verfahren nach Anspruch 1, wobei der Fremd-Agent (108) der Endpunkt eines zwischen dem besagten Heim-Agenten (110) und dem besagten Fremd-Agenten (108) aufgebauten Tunnels (124) zum Tunneln der besagten IP-Datagramme (122) ist.

4. Das Verfahren nach Anspruch 1, wobei der Tunneltyp (120) einem beliebigen der im Mobil-IP schon umfassten Tunneltypen, wie beispielsweise IP-in-IP-Einkapselung, minimale Einkapselung innerhalb des IPs und Generic-Routing-Einkapselung, oder einem beliebigen Kandidaten für die spätere Einbindung wie beispielsweise Mehrfachprotokoll-Labelvermittlung oder IP-Sicherheit, entspricht.

5. Ein Verfahren zur Anforderung der Verwendung eines erwünschten Datentunneltyps (120) zum Tunneln von für einen mobilen Knoten (102) bestimmten Internet-Protokoll (IP)-Datagrammen (122) von einem Heim-Agenten (110) an einen Fremd-Agenten (108), wobei der besagte mobile Knoten (102) dem besagten Heim-Agenten (110) zugeordnet ist, wobei der besagte mobile Knoten (102) über den besagten Fremd-Agenten (108) mit dem besagten Heim-Agenten (110) verknüpft ist, wobei das Verfahren am Heim-Agent (108) ausgeführt wird und umfasst:
- Empfangen einer Registrierungsanforderungsnachricht (116) des besagten mobilen Knotens (102) von dem besagten Fremd-Agenten (108), wobei die besagte Registrierungsanforderungsnachricht (116) eine Erweiterung (118) umfasst, wobei die besagte Erweiterung (118) den erwünschten Tunneltyp (120) spezifiziert;
- Ermitteln, ob der besagte Tunneltyp (120) von dem besagten Heim-Agenten (110) unterstützt wird; und
- Verwenden des besagten Tunneltyps (120) zum Tunneln der besagten für den besagten mobilen Knoten (102) bestimmten IP-Datagramme (122) von dem besagten Heim-Agenten (110) an den besagten Fremd-Agenten (108), wenn der besagte Tunneltyp (120) von dem besagten Heim-Agenten unterstützt wird.

6. Ein Kommunikationsnetzwerk (100), wobei das besagte Kommunikationsnetzwerk umfasst:
- Mittel zum Empfangen einer Registrierungsanforderungsnachricht (116) von einem mobilen Knoten (102), wobei der besagte mobile Knoten (102) einem Heim-Agenten (110) des besagten Kommunikationsnetzwerks (100) zugeordnet ist;
- Mittel zum Hinzufügen einer Erweiterung (118) zu der besagten Registrierungsanforderungsnachricht (116);
- Mittel zum Senden der besagten Registrierungsanforderungsnachricht (116) mit der besagten Erweiterung (118); und
- Mittel zum Empfangen der besagten Registrierungsanforderungsnachricht (116) mit der besagten Erweiterung (118);
**dadurch gekennzeichnet, dass** die besagte Erweiterung einen erwünschten Tunneltyp (120) zum Tunneln von für den besagten mobilen Knoten bestimmten Internet-Protokoll (IP)-Datagrammen (122) von dem Heim-Agenten an einen Fremd-Agenten des besagten Kommunikatlonsnetzwerks spezifiziert, wobei der besagte Fremd-Agent den mobilen Knoten und den besagten Heim-Agenten miteinander verbindet; und durch
- Mittel zum Verwenden des besagten Tunneltyps (120) zum Tunneln der besagten für den besagten mobilen Knoten (102) bestimmten IP-Datagramme (122) von dem besagten Heim-Agenten (110) an den besagten Fremd-Agenten (108).

7. Ein Fremd-Agent (108), umfassend:
- Mittel zum Empfangen einer Registrierungsanforderungsnachricht (116) von einem mobilen Knoten (102), wobei der besagte mobile Knoten (102) einem Heim-Agenten (110) zugeordnet ist; **gekennzeichnet durch**
- Mittel zum Hinzufügen einer Erweiterung (118) zu der besagten Registrierungsanforderungsnachricht (116), wobei die besagte Erweiterung (118) einen erwünschten Tunneltyp (120) zum Tunneln von für den besagten mobilen Knoten (102) bestimmten Internet-Protokoll (IP)-Datagrammen (122) von dem Heim-Agenten (110) an den besagten Fremd-Agenten (108) spezifiziert; und
- Mittel zum Senden der besagten Registrierungsanforderungsnachricht (116) mit der besagten Erweiterung (118) an den besagten Heim-Agenten (110).

8. Ein Heim-Agent (110), **gekennzeichnet durch**:
- Mittel zum Empfangen einer Registrierungsanforderungsnachricht (116) eines mobilen Knotens (102) von einem Fremd-Agenten (108), wobei der besagte mobile Knoten (102) dem besagten Heim-Agenten (110) zugeordnet ist, wobei die besagte Registrierungsanforderungsnachricht (116) eine Erweiterung (118) umfasst, wobei die besagte Erweiterung (118) einen erwünschten Tunneltyp (120) zum Tunneln von für den besagten mobilen Knoten (102) bestimmten Internet-Protokoll (IP)-Datagrammen (122) von dem Heim-Agenten (110) an den besagten Fremd-Agenten (108) spezifiziert;
- Mittel zum Verwenden des besagten erwünschten Tunneltyps (120) zum Tunneln der für den besagten mobilen Knoten (102) bestimmten IP-Datagramme (122) von dem besagten Helm-Agenten (110) an den besagten Fremd-Agenten (108).

9. Ein Computerprogramm-Produkt für das Anfordern der Verwendung eines erwünschten Tunneltyps (120) zum Tunneln von für einen mobilen Knoten (102) bestimmten Internet-Protokoll (IP)-Datagrammen (122) von einem Heim-Agenten (110) an einen Fremd-Agenten (108), wobei der besagte mobile Knoten (102) dem besagten Heim-Agenten (110) zugeordnet ist, wobei der besagte mobile Knoten (102) über den besagten Fremd-Agenten (108) mit dem besagten Heim-Agenten (110) verknüpft ist, wobei das besagte Computerprogramm-Produkt computerausführbare Befehle umfasst, wobei die besagten Befehle für das Durchführen der folgenden Schritte am Fremd-Agenten (108) bestimmt sind:
- Empfangen einer Registrierungsanforderungsnachricht (116) von einem mobilen Knoten (102) an dem besagten Fremd-Agenten (108);
**gekennzeichnet durch**
- Hinzufügen einer Erweiterung (118) zu der besagten Registrierungsanforderungsnachricht (116), wobei die besagte Erweiterung (118) den besagten erwünschten Tunneltyp (120) spezifiziert; und
- Senden der besagten Registrierungsanforderungsnachricht (116) mit der besagten Erweiterung (118) an den besagten Heim-Agenten (110).

10. Ein Computerprogramm-Produkt für das Anfordern der Verwendung eines erwünschten Tunneltyps (120) zum Tunneln von für einen mobilen Knoten (102) bestimmten Internet-Protokoll (IP)-Datagrammen (122) von einem Heim-Agenten (110) an einen Fremd-Agenten (108), wobei der besagte mobile Knoten (102) dem besagten Heim-Agenten (110) zugeordnet ist, wobei der besagte mobile Knoten (102) über den besagten Fremd-Agenten (108) mit dem besagten Heim-Agenten (110) verknüpft ist, wobei das besagte Computerprogramm-Produkt computerausführbare Befehle umfasst, **dadurch gekennzeichnet, dass** die besagten Befehle für das Durchführen der folgenden Schritte am Heim-Agent (108) bestimmt sind:
- Empfangen einer Registrierungsanforderungsnachricht (116) eines mobilen Knotens (102) von dem besagten Fremd-Agenten (108), wobei die besagte Registrierungsanforderungsnachricht (116) eine Erweiterung (118) umfasst, wobei die besagte Erweiterung (118) den besagten erwünschten Tunneltyp (120) spezifiziert;
- Ermitteln, ob der besagte erwünschte Tunneltyp (120) von dem besagten Heim-Agenten (110) unterstützt wird;
- Verwenden des besagten Tunneltyps (120) zum Tunneln der besagten für den besagten mobilen Knoten (102) bestimmten IP-Datagramme (122) von dem besagten Heim-Agenten (110) an den besagten Fremd-Agenten (108), wenn der besagte Tunneltyp (120) von dem besagten Heim-Agenten (110) unterstützt wird.

## Revendications

1. Procédé pour demander l'utilisation d'un type de tunnel (120) souhaité pour la tunnellisation de datagrammes (122) au protocole Internet (IP) destinés à un noeud mobile (102) depuis un agent de rattachement (110) vers un agent étranger (108), ledit noeud mobile (102) étant associé audit agent de rattachement (110), ledit noeud mobile (102) étant lié audit agent de rattachement (110) par le biais dudit agent étranger (108), ledit procédé étant exécuté sur l'agent étranger (108) et comprenant :
- réception d'un message de demande d'enregistrement (116) par ledit agent étranger (108) de la part dudit noeud mobile (102),
**caractérisé par**
- ajout d'une extension (118) audit message de demande d'enregistrement (116), ladite extension (118) spécifiant ledit type de tunnel (120) souhaité ; et
- émission dudit message de demande d'enregistrement (116) avec ladite extension (118) vers ledit agent de rattachement (110).

2. Procédé selon la revendication 1, comprenant en outre :
- réception d'un message de réponse d'enregistrement (126) de la part de l'agent de rattachement (110), ledit agent de rattachement (110), dans ledit message de réponse d'enregistrement, accordant ou refusant l'utilisation du type de tunnel (120) souhaité,
- utilisation d'un type de tunnel par défaut tel qu'il est défini par l'architecture de réseau correspondante si l'utilisation dudit type de tunnel (120) souhaité est refusée par l'agent de rattachement (110).

3. Procédé selon la revendication 1, ledit agent étranger (108) étant le point final d'un tunnel (124) établi entre ledit agent de rattachement (110) et ledit agent étranger (108) pour la tunnellisation desdits datagrammes IP (122).

4. Procédé selon la revendication 1, le type de tunnel (120) désignant l'un quelconque des types de tunnel déjà inclus dans l'IP mobile tel que l'encapsulation IP dans l'IP, l'encapsulation minimale dans l'IP et l'encapsulation de routage générique, ou tout candidat à une future inclusion tel que la commutation multiprotocole par étiquettes ou la sécurité IP.

5. Procédé pour demander l'utilisation d'un type de tunnel (120) souhaité pour la tunnellisation de datagrammes (122) au protocole Internet (IP) destinés à un noeud mobile (102) depuis un agent de rattachement (110) vers un agent étranger (108), ledit noeud mobile (102) étant associé audit agent de rattachement (110), ledit noeud mobile (102) étant lié audit agent de rattachement (110) par le biais dudit agent étranger (108), ledit procédé étant exécuté sur l'agent étranger (110) et étant
**caractérisé par** :
- réception d'un message de demande d'enregistrement (116) dudit noeud mobile (102) de la part dudit agent étranger (108), ledit message de demande d'enregistrement (116) comprenant une extension (118), ladite extension (118) spécifiant ledit type de tunnel (120) souhaité ;
- détermination si ledit type de tunnel (120) souhaité est pris en charge par ledit agent de rattachement (110) ; et
- utilisation dudit type de tunnel (120) pour la tunnellisation desdits datagrammes IP (122) destinés audit noeud mobile (102) depuis ledit agent de rattachement (110) vers ledit agent étranger (108) si ledit type de tunnel (120) est pris en charge par ledit agent de rattachement (110).

6. Réseau de communication (100), ledit réseau de communication comprenant :
- moyens pour recevoir un message de demande d'enregistrement (116) de la part d'un noeud mobile (102), ledit noeud mobile (102) étant associé à un agent de rattachement (110) dudit réseau de communication (100) ;
- moyens pour ajouter une extension (118) audit message de demande d'enregistrement (116) ;
- moyens pour émettre ledit message de demande d'enregistrement (116) avec ladite extension (118) ; et
- moyens pour recevoir ledit message de demande d'enregistrement (116) avec ladite extension (118),
**caractérisé en ce que** ladite extension spécifie un type de tunnel (120) souhaité pour la tunnellisation de datagrammes (122) au protocole Internet (IP) destinés audit noeud mobile depuis l'agent de rattachement vers un agent étranger dudit réseau de communication, ledit agent étranger interconnectant ledit noeud mobile et ledit agent de rattachement, et par
- moyens pour utiliser ledit type de tunnel (120) pour la tunnellisation desdits datagrammes IP (122) destinés audit noeud mobile (102) dudit agent de rattachement (110) vers ledit agent étranger (108).

7. Agent étranger (108) comprenant :
- moyens pour recevoir un message de demande d'enregistrement (116) de la part d'un noeud mobile (102), ledit noeud mobile (102) étant associé à un agent de rattachement (110) ;
**caractérisé par**
- moyens pour ajouter une extension (118) audit message de demande d'enregistrement (116), ladite extension (118) spécifiant un type de tunnel (120) souhaité pour la tunnellisation de datagrammes (122) au protocole Internet (IP) destinés audit noeud mobile (102) de l'agent de rattachement (110) vers ledit agent étranger (108) ; et
- moyens pour émettre ledit message de demande d'enregistrement (116) avec ladite extension (118) vers ledit agent de rattachement (110).

8. Agent de rattachement (110) **caractérisé par** :
- moyens pour recevoir un message de demande d'enregistrement (116) d'un noeud mobile (102) de la part d'un agent étranger (108), ledit noeud mobile (102) étant associé audit agent de rattachement (110), ledit message de demande d'enregistrement (116) comprenant une extension (118), ladite extension (118) spécifiant un type de tunnel (120) souhaité pour la tunnellisation de datagrammes (122) au protocole Internet (IP) destinés audit noeud mobile (102) depuis l'agent de rattachement (110) vers ledit agent étranger (108) ;
- moyens pour utiliser ledit type de tunnel (120) souhaité pour la tunnellisation desdits datagrammes IP (122) destinés audit noeud mobile (102) dudit agent de rattachement (110) vers ledit agent étranger (108).

9. Produit de programme informatique pour demander l'utilisation d'un type de tunnel (120) souhaité pour la tunnellisation de datagrammes (122) au protocole Internet (IP) destinés à un noeud mobile (102) depuis un agent de rattachement (110) vers un agent étranger (108), ledit noeud mobile (102) étant associé audit agent de rattachement (110), ledit noeud mobile (102) étant lié audit agent de rattachement (110) par le biais dudit agent étranger (108), ledit produit de programme informatique comprenant des instructions exécutables par un ordinateur, lesdites instructions étant adaptées pour exécuter les étapes ci-après sur l'agent étranger (108) :
- réception d'un message de demande d'enregistrement (116) par ledit agent étranger (108) de la part d'un noeud mobile (102) ;
**caractérisé par**
- ajout d'une extension (118) audit message de demande d'enregistrement (116), ladite extension (118) spécifiant ledit type de tunnel (120) souhaité ; et
- émission dudit message de demande d'enregistrement (116) avec ladite extension (118) vers ledit agent de rattachement (110).

10. Produit de programme informatique pour demander l'utilisation d'un type de tunnel (120) souhaité pour la tunnellisation de datagrammes (122) au protocole Internet (IP) destinés à un noeud mobile (102) depuis un agent de rattachement (110) vers un agent étranger (108), ledit noeud mobile (102) étant associé audit agent de rattachement (110), ledit noeud mobile (102) étant lié audit agent de rattachement (110) par le biais dudit agent étranger (108), ledit produit de programme informatique comprenant des instructions exécutables par un ordinateur, **caractérisé en ce que** lesdites instructions sont adaptées pour exécuter les étapes ci-après sur l'agent de rattachement (110) :
- réception d'un message de demande d'enregistrement (116) dudit noeud mobile (102) de la part dudit agent étranger (108), ledit message de demande d'enregistrement (116) comprenant une extension (118), ladite extension (118) spécifiant ledit type de tunnel (120) souhaité ;
- détermination si ledit type de tunnel (120) souhaité est pris en charge par ledit agent de rattachement (110) ;
- utilisation dudit type de tunnel (120) pour la tunnellisation desdits datagrammes IP (122) destinés audit noeud mobile (102) depuis ledit agent de rattachement (110) vers ledit agent étranger (108) si ledit type de tunnel (120) est pris en charge par ledit agent de rattachement (110).
